# EUROPÄISCHE PATENTSCHRIFT

(11) **EP 3 266 294 B1**
(45) Veröffentlichungstag und Bekanntmachung des Hinweises auf die Patenterteilung: **01.01.2020**
(21) Anmeldenummer: 17401069.4
(22) Anmeldetag: 27.06.2017
(51) Int. Cl.: A01C 5/06

(54) **LANDWIRTSCHAFTLICHE SÄMASCHINE MIT ZUSTREICH- UND/ODER ANDRÜCKVORRICHTUNG**
AGRICULTURAL SEEDING MACHINE WITH CLOSING AND/OR PRESSING DEVICE
SEMOIR AGRICOLE COMPRENANT UN DISPOSITIF DE RECOUVREMENT ET/OU DE PRESSION

(30) Priorität: 04.07.2016 DE 102016112158
(43) Veröffentlichungstag der Anmeldung: 10.01.2018
(73) Patentinhaber: Amazonen-Werke H. Dreyer GmbH & Co. KG, 49205 Hasbergen (DE)
(72) Erfinder: Helms, Helge, 26125 Oldenburg (DE)

(56) Entgegenhaltungen:
- EP-A1- 2 633 747
- EP-A1- 2 868 181
- EP-A1- 2 912 933

## Beschreibung

Die Erfindung betrifft eine landwirtschaftliche Sämaschine gemäß des Oberbegriffes des Patentanspruches 1.

Eine derartige Sämaschine ist in der EP 2 912 933 A1 beschrieben. Diese landwirtschaftliche Sämaschine weist einen Hauptrahmen, ein an dem Hauptrahmen angeordnetes einen Ladesteg tragendes Rahmenelement, mehrere an dem Hauptrahmen über Halteelemente angelenkte Säschareinheiten zur Ausbringung zu verteilenden Saatgutes, sowie eine Zustreich- und/oder Andrückvorrichtung, welche zumindest einen quer zur Fahrtrichtung angeordneten Tragbalken umfasst, der an mehreren in Fahrtrichtung nach vorn ragenden im vorderen Bereich gelenkig befestigten Tragarmen befestigt ist und an dem quer zur Fahrtrichtung mehrere Zustreich- und/oder Andrückelemente angeordnet sind, auf.

Nachteilig ist hier die Einstellung der Zustreich- und/oder Andrückvorrichtung mittels mehrerer Einstellelemente, da ein Bediener mehrere separate Einstellelemente bedienen muss, um die von Ihnen gewünschte Wirkung zu erzielen. Somit ist die Einstellung der Zustreich- und/oder Andrückvorrichtung hier unkomfortabel und fehleranfällig.

Auch die EP 2 868 181 A1 zeigt eine Sämaschine mit einem Ladesteg und einer daran angeordneten Zustreicheinrichtung gemäß des Oberbegriffes des Patentanspruches 1.

Eine weitere Sämaschine ist in DE 696 05 466 T2 beschrieben. Die dort beschriebene Sämaschine weist einen Hauptrahmen auf, an dem mehrere als Säschareinheiten ausgebildete Vorrichtungen zur Ablage von Saatgut in den Boden angeordnet sind. Auf dem Hauptrahmen stützt sich ein Vorratsbehälter zur Bevorratung von auszubringendem Saatgut und/oder Düngemittel ab. Die Sämaschine ist weiterhin mit einer Zustreich- und/oder Andrückvorrichtung ausgestattet. Die Zustreich- und/oder Andrückvorrichtung weist mehrere Zustreich- und/oder Andrückelemente auf, welche an einem quer zur Fahrtrichtung angeordneten Tragbalken befestigt sind. An dem Tragbalken ist zumindest ein Tragarm befestigt, welcher in seinem in Fahrtrichtung vorderen Bereich gelenkig an einem Rahmenelement befestigt ist. Zur Einstellung der Zustreich- und/oder Andrückvorrichtung umfasst die beschriebene Sämaschine mehrere separate Einstellelemente deren Zusammenwirken ein Ausheben, Absenken und/oder die Einstellung der Arbeitstiefe und/oder des Arbeitsdrucks der Zustreich- und/oder Andrückvorrichtung bewirkt.

Nachteilig an der beschriebenen Ausführungsform ist die Einstellung der Zustreich- und/oder Andrückvorrichtung mittels mehrerer Einstellelemente. Da ein Bediener mehrere separate Einstellelemente bedienen muss, um die von ihm gewünschte Wirkung zu erzielen, ist die Einstellung der Zustreich- und/oder Andrückvorrichtung der beschriebenen Sämaschine unkomfortabel und fehleranfällig.

Aufgabe der Erfindung ist es daher, eine Anordnung bereitzustellen, mittels derer eine komfortable und fehlerfreie Einstellung der Zustreich- und/oder Andrückvorrichtung einer Sämaschine möglich ist.

Erfindungsgemäß wird diese Aufgabe dadurch gelöst, dass ein zentrales, auf einer Maschinenseite angeordnetes und auf alle Tragarme einwirkendes Einstellelement vorgesehen ist.

Dies hat den Vorteil, dass der Bediener der Sämaschine zur Einstellung des Arbeitsdrucks, zum Ausheben und/oder Absenken der Zustreich- und/oder Andrückvorrichtung nur ein zentrales Einstellelement betätigen muss. Es müssen nicht verschiedene Einstellelemente betätigt werden, die sich an verschiedenen Positionen der Sämaschine befinden. Dies lässt eine komfortable Einstellung der Zustreich- und/oder Andrückvorrichtung zu. Zusätzlich muss der Bediener nicht darauf achten, dass die Einstellung mehrerer Einstellelemente in einer für den Arbeitsvorgang geeigneten Kombination erfolgt. Dadurch wird die Fehleranfälligkeit der Einstellung der Zustreich- und/oder Andrückvorrichtung deutlich reduziert.

Durch das Einwirken des zentralen Einstellelements auf alle Tragarme der Zustreich- und/oder Andrückvorrichtung wird in vorteilhafter Weise eine gleichmäßige Einstellung der Zustreich- und/oder Andrückvorrichtung entlang der gesamten Maschinenbreite erreicht. Somit wird über die gesamte Arbeitsbreite ein qualitativ gleichwertiges Arbeitsergebnis sichergestellt.

Weiter zeigt die EP 2 633 747 A1 eine weitere Zustreich- und/oder Andrückvorrichtung für eine Sämaschine. Bei dieser Vorrichtung ist ein Einstellelement vorgesehen, mittels welchem die Zustreich- und/oder Andrückvorrichtung ausgehoben, abgesenkt und/oder mit einem Druck gegen den Erdboden beaufschlagt wird. Hierzu ist ein zentrales und auf mehrere Tragarme einwirkendes Einstellelement vorgesehen. Durch die zentrale Anordnung des Einstellelementes ist dieses von der Seite her sowohl für die händische Betätigung wie auch für die Wartung schwer zugänglich.

Neben dem Arbeitsdruck ist die mit dem Arbeitsdruck zusammenhängende Arbeitstiefe wesentlich für die Funktion einer Zustreich- und/oder Andrückvorrichtung. Vorteilhaft ist daher, dass das zentrale Einstellelement geeignet ist, die Arbeitstiefe der Zustreich- und/oder Andrückvorrichtung einzustellen. Somit werden Komfort und Einstellsicherheit weiter gesteigert. Das Sicherstellen eines homogenen Arbeitsergebnisses wird durch diese Maßnahme weiter begünstigt.

Ein besonderer Vorteil ergibt sich dadurch, dass das zentrale Einstellelement auf der in Fahrtrichtung linken Seite der Sämaschine angeordnet ist. Durch diese Ausführungsform hat der Bediener der Sämaschine, welcher zur Einstellung der Zustreich- und/oder Andrückvorrichtung die Kabine seiner landwirtschaftlichen Zugmaschine verlassen muss, einen besonders kurzen Weg zur zentralen Einstelleinheit. Typischerweise befindet sich der Ausstieg einer landwirtschaftlichen Zugmaschine auf ihrer in Fahrtrichtung linken Seite.

In einer vorteilhaften Ausführungsform der Erfindung ist vorgesehen, dass das zentrale Einstellelement längenveränderlich ausgebildet ist. Längenveränderliche Einstellelemente sind beispielsweise Hydraulikzylinder, Gewindespindeln und/oder Lochstangen. Derartige Einstellelemente weisen eine besonders einfache Konstruktion auf. Durch ihre einfache Konstruktion sind sie besonders robust, zuverlässig und wartungsarm. Zugleich sind derartige Bauteile sehr kostengünstig.

Es ist vorteilhaft, dass zumindest ein Umlenkhebel vorgesehen ist, der gelenkartig an dem zentralen Einstellelement angelenkt ist und der Umlenkhebel über eine Koppelstange mit dem zumindest einen Tragarm verbunden ist. Umlenkhebel sind ebenso eine robuste, zuverlässige und kostengünstige Konstruktion. Durch die gelenkartige Anlenkung des Umlenkhebels an das zentrale Einstellelement kann das längenveränderliche zentrale Einstellelement unter flexiblem Winkel an dem Umlenkhebel angreifen. Die Koppelstange bietet eine zuverlässige und kostengünstige Möglichkeit, die Kraft und die Bewegung von dem Umlenkhebel auf den Tragarm zu übertragen.

Ein besonderer Vorteil wird dadurch erreicht, dass jedem Tragarm ein Umlenkhebel mit Koppelstange zugeordnet ist. Somit wird die Voraussetzung dafür geschaffen, dass die an mehreren Tragarmen befestigte Zustreich- und/oder Andrückvorrichtung über die gesamte Arbeitsbreite gleichmäßig eingestellt wird. Vorzugsweise befindet sich auf jeder Maschinenseite zumindest ein Tragarm, von denen jeder erfindungsgemäß mit einem Umlenkhebel und einer Koppelstange ausgestattet ist.

Eine vorteilhafte Ausführung der Erfindung sieht vor, dass die Schwenkachse des zumindest einen Umlenkhebels parallel zur Fahrtrichtung der Sämaschine liegt. Dadurch ist es möglich, dass ein seitlich an der Sämaschine angeordnetes längenveränderliches zentrales Einstellelement seitlich an dem Umlenkhebel angreift und diesen durch Längenänderung um seine Schwenkachse verschwenkt.

Ein besonderer Vorteil wird dadurch erreicht, dass das zentrale Einstellelement im Zusammenwirken mit dem zumindest einen Umlenkhebel geeignet ist, eine Längenänderung des zentralen Einstellelements in eine vertikale Bewegung des zumindest einen Tragarms umzusetzen. Somit wird in besonders einfacher und zuverlässiger Weise die Möglichkeit geschaffen, die vertikale Bewegung und/oder Einstellung der Zustreich- und/oder Andrückvorrichtung mithilfe der linearen, vorzugsweise zumindest annähernd horizontalen Bewegung des zentralen Einstellelements zu bewirken. Gleichzeitig kann die zentrale Einstelleinheit für den Bediener gut zugänglich an der Maschinenseite positioniert werden.

Ein zusätzlicher Vorteil ergibt sich bei dieser Ausführungsform dadurch, dass der für den Bediener zur vertikalen Bewegung der Zustreich- und/oder Andrückvorrichtung notwendige Kraftaufwand durch eine geeignete Wahl der Länge des Umlenkhebels und/oder der Koppelstange reduziert werden kann. Analog ist auch die für eine bestimmte Einstellung der Zustreich- und/oder Andrückvorrichtung notwendige Längenänderung des zentralen Einstellelements abhängig von der Länge des Umlenkhebels und/oder der Koppelstange.

Es ist weiterhin vorteilhaft, dass eine Verbindungsstrebe, welche den zumindest einen Umlenkhebel mit zumindest einem weiteren Umlenkhebel verbindet, vorgesehen ist. Durch eine derartige Verbindungsstrebe wird die Bewegung des zentralen Einstellelements gleichermaßen auf die mittels Verbindungsstrebe verbundenen Umlenkhebel übertragen. So lassen sich insbesondere sämtliche erfindungsgemäße Umlenkhebel der Sämaschine miteinander verbinden. In einfacher und zuverlässiger Weise werden dadurch die die Zustreich- und/oder Andrückvorrichtung tragenden Tragarme über die gesamte Maschinenbreite gleichmäßig bewegt und/oder mit gleichem Druck beaufschlagt. Dadurch wird ein qualitativ gleichwertiges Arbeitsergebnis über die gesamte Maschinenbreite erreicht.

Es ist von Vorteil, dass das zentrale Einstellelement einen Hydraulikzylinder und eine Gewindespindel umfasst. Durch eine derartige zweiteilige Ausführung des zentralen Einstellelements können die Vorteile verschiedener längenveränderlicher Einstellelemente kombiniert werden. So ist beispielsweise denkbar, den Hydraulikzylinder für größere Längenänderungen zu nutzen, und die Gewindespindel für vergleichsweise geringe Längenänderungen.

In einer weiteren vorteilhaften Ausführungsform der Erfindung ist vorgesehen, dass die Einstellung der Gewindespindel des zentralen Einstellelements mittels eines dafür geeigneten Werkzeugs erfolgt. Das Ansetzen des Werkzeugs erfolgt an einer geeigneten, dafür vorgesehenen Stelle. Ein geeignetes Werkzeug kann beispielsweise in Form einer Kurbel ausgebildet sein. Ein derartiges Werkzeug ist vorzugsweise geeignet, durch eine Hebelwirkung dem Bediener die Einstellung das Bewegen des zentralen Einstellelements zu erleichtern. Zusätzlich muss der Bediener nicht mit seinen Händen in der Nähe beweglicher Teiler der Sämaschine arbeiten. Somit steigert die Verwendung eines derartigen Werkzeugs den Bedienkomfort und die Arbeitssicherheit erheblich.

Es ist von Vorteil, dass das zentrale Einstellelement bei Entfernen des zu seiner Einstellung geeigneten Werkzeugs automatisch verriegelt. Das automatische Verriegeln der beweglichen Teile des zentralen Einstellelements bei Entfernen des Werkzeugs verhindert ein Verstellen des Einstellelements und/oder der Zustreich- und/oder Andrückvorrichtung außerhalb des Einstellvorgangs. Eine Bewegung des zentralen Einstellelements und/oder der Zustreich und/oder Andrückvorrichtung lässt sich nur unter bewusster Verwendung des Werkzeugs herbeiführen. Somit ist sichergestellt, dass die gewählten Einstellungen während des Arbeitsvorgangs erhalten bleiben. Dadurch wird ein gleichmäßiges Arbeitsergebnis sichergestellt. Zugleich verringert sich die Verletzungsgefahr eines Bedieners, welcher er durch eine unkontrollierte und/oder unerwünschte Bewegung beweglicher Teile der Sämaschine, insbesondere während des Eistellvorgangs, ausgesetzt ist.

Ein weiterer Vorteil ist dadurch gegeben, dass das Ausheben und/oder Absenken der Zustreich- und/oder Andrückvorrichtung im Wesentlichen durch die Bewegung des Hydraulikzylinders bewirkt wird und die Druckbeaufschlagung der Zustreich- und/oder Andrückvorrichtung im Wesentlichen durch die Bewegung der Gewindespindel bewirkt wird. Dadurch kann bei Verwendung eines derartigen zweiteiligen zentralen Einstellelements der für größere Längenänderungen nutzbare Hydraulikzylinder im Wesentlichen die Aufgaben übernehmen, für die größere vertikale Bewegungen notwendig sind. Die Gewindespindel hingegen ist feiner einstellbar und bietet eine vergleichsweise kleinere maximale Längenänderung. Sie kann dann im Wesentlichen für solche Aufgaben genutzt werden, welche eine weniger große vertikale Bewegung erfordern.

Es ist vorteilhaft, dass der zumindest eine Tragarm in seinem vorderen Bereich gelenkig an dem den Ladesteg tragenden Rahmenelement angelenkt ist. Durch eine derartige Anbindung kann das zentrale Eistellelement an einer für den Bediener gut zugänglichen Stelle oberhalb der Säschareinheiten an der Sämaschine angebracht werden. Eine derartige Ausführung erhöht den Bedienkomfort der Sämaschine signifikant.

Weitere Einzelheiten der Erfindung sind der Beispielsbeschreibung und den Zeichnungen zu entnehmen. Die Zeichnungen zeigen
- Fig.1: eine landwirtschaftliche Sämaschine in perspektivischer Darstellung von schräg hinten,
- Fig.2: die Zustreich- und/oder Andrückvorrichtung einer landwirtschaftlichen Sämaschine in perspektivischer Ansicht von schräg hinten,
- Fig.3: eine detaillierte Darstellung der zentralen Einstelleinheit in einer Querschnittsansicht,
- Fig.4: die zentrale Einstelleinheit in perspektivischer Ansicht von hinten und
- Fig.5: den Umlenkhebel und dessen Anbindung an die zentrale Einstelleinheit und einen Tragarm der Zustreich- und/oder Andrückvorrichtung.

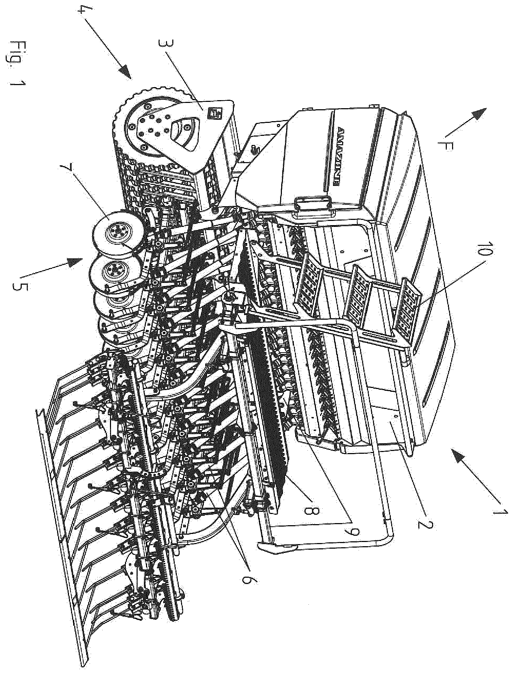

Eine landwirtschaftliche Sämaschine 1, welche im gewählten Ausführungsbeispiel der Figuren 1 bis 5 zum Anbau an eine landwirtschaftliche Zugmaschine vorgesehen ist, weist einen Vorratsbehälter 2 zur Bevorratung von auszubringendem Material, vorzugsweise Saatgut und/oder Dünger, auf. Der Vorratsbehälter 2 stützt ist auf dem Rahmen einer Walzeneinheit 4 der Sämaschine 1 ab, wie in Fig. 1 gezeigt ist.

Der untere Bereich des Vorratsbehälters 2 ist als Auslaufbereich ausgestaltet, in welchem nicht dargestellte Auslauföffnungen angeordnet sind. Über die Auslauföffnungen wird das zu verteilende Material an zu Ausbringelementen 5 führende Leitungen 6 abgegeben. Die Ausbringelemente 5 sind als Säschareinheiten ausgebildet und in Fahrtrichtung F hinter der Walzeneinheit 4 angeordnet.

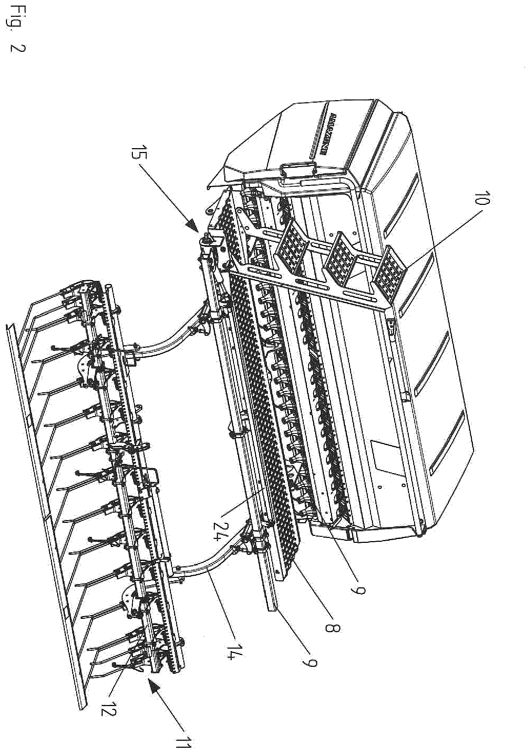

Die Ausbringelemente 5 sind geeignet, um Saatgut und/oder Dünger im Erdboden abzulegen. Dazu weisen sie jeweils Furchenöffnungsvorrichtungen 7 auf, welche in den Fig. 1 und 2 als Scheibenschare, insbesondere als Doppelscheibenschare, ausgebildet sind. Zusätzlich weisen die Ausbringelemente 5 nicht dargestellte Saatgutablagevorrichtungen zur Abgabe von Saatgut in die geöffnete Furche sowie nicht dargestellte Tiefenführungselemente auf.

Oberhalb der Ausbringelemente 5 ist ein Ladesteg 8 angeordnet. Der Ladesteg 8 wird von einem Rahmenelement 9 getragen, welches am Hauptrahmen der Sämaschine 1 angeordnet ist. Über einen Aufstieg 10 wird der Ladesteg 8 beispielsweise zum Beladen des Vorratsbehälters 2 oder zur Sichtkontrolle des Behälterfüllstandes durch einen Bediener betreten. Der Aufstieg 10 ist verschwenkbar am Ladesteg 8 angelenkt.

In Fahrtrichtung F hinter den Ausbringelementen 5 ist eine Zustreich- und/oder Andrückvorrichtung 11 angeordnet. Die Zustreich- und/oder Andrückvorrichtung 11 umfasst im Beispiel der Fig. 2 einen quer zur Fahrtrichtung F angeordneten Tragbalken 12. An dem Tragbalken 12 sind mehrere Zustreich- und/oder Andrückelemente 13 angeordnet. Die Zustreich- und/oder Andrückelemente 13 dienen nach Ablage des Saatguts in den durch die Furchenöffnungsvorrichtungen 7 geöffneten Furchen dem Schließen der Furchen, der Bedeckung des abgelegten Saatguts mit Erde und/oder dem Andrücken des Saatgut und/oder des das Saatgut bedeckenden Bodens. Im gewählten Beispiel sind die Zustreich- und/oder Andrückelemente 13 als Striegel ausgebildet, wie Fig. 2 zeigt. Alternativ oder zusätzlich ist eine Ausgestaltung beispielsweise als Rollen denkbar.

Wie Fig. 2 zeigt, ist der die Zustreich- und/oder Andrückelemente 13 tragende Tragbalken 12 an zwei in Fahrtrichtung F nach vorn ragenden Tragarmen 14 befestigt. Die Tragarme 14 sind in ihrem vorderen Bereich oberhalb der Ausbringelemente 5 gelenkig mit dem den Ladesteg 8 tragenden Rahmenelement 9 verbunden. Die Tragarme 14 sind um eine zumindest annähernd horizontal, quer zur Fahrtrichtung F liegende Schwenkachse verschwenkbar. Damit sind die Tragarme 14 und die von den Tragarmen 14 getragene Zustreich- und/oder Andrückvorrichtung 11 in vertikaler Richtung bewegbar.

Zur Einstellung der Zustreich- und/oder Andrückvorrichtung 11 ist ein zentrales Einstellelement 15 vorgesehen. Die Zustreich- und/oder Andrückvorrichtung 11 wird mittels des zentralen Einstellelementes 15 ausgehoben, abgesenkt und/oder mit einem Druck gegen den Erdboden beaufschlagt. Zusätzlich wird die Arbeitstiefe der Zustreich- und/oder Andrückelemente mittels des zentralen Einstellelements 15 eingestellt.

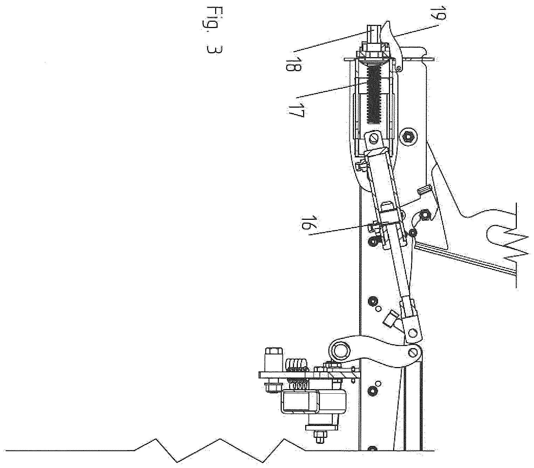

Fig. 3 zeigt das zentrale Einstellelement 15 im Detail. Das zentrale Einstellelement 15 ist zweiteilig ausgeführt. Im gewählten Beispiel ist das zentrale Einstellelement 15 aus einem Hydraulikzylinder 16 und einer Gewindespindel 17 zusammengesetzte, welche gelenkig miteinander verbunden sind.

Die Gewindespindel 17 ist durch Drehen des Gewindes längenveränderlich. Es sind mittels Drehung geringe Längenveränderungen kontinuierlich einstellbar. Der Hydraulikzylinder 16 ist im Vergleich zur Gewindespindel 17 zur Einstellung größerer Längenänderungen geeignet.

Zur Drehung der Gewindespindel 17 ist die Verwendung eines geeigneten Werkzeugs, beispielsweise einer Kurbel, vorgesehen. Dieses Werkzeug wird dazu auf einen dafür vorgesehenen Werkzeugaufsatz 18 gesteckt. Beim Aufsetzen des Werkzeugs wird eine Sicherungsklinke 19 entriegelt, wodurch die Gewindespindel 17 drehbar und somit einstellbar ist. Durch das Entfernen des Werkzeugs nach erfolgter Einstellung der Gewindespindel 17 verriegelt die Sicherungsklinke 19 erneut, wodurch die Gewindespindel 17 arretiert ist.

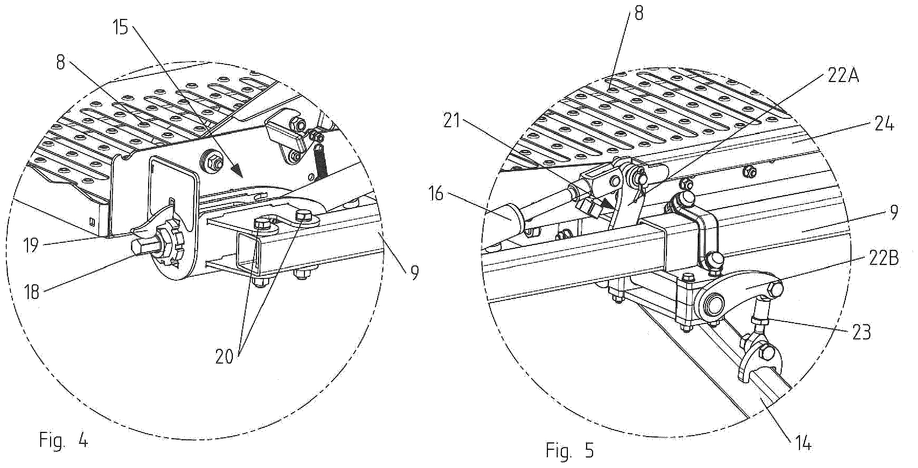

Das zentrale Einstellelement 15 ist beispielsweise mittels Schraubverbindung 20 fest mit dem den Ladesteg 8 tragenden Rahmenelement 9 verbunden, wie es in Fig. 4 gezeigt ist. Dabei ist es auf der in Fahrtrichtung F linken Seite der Sämaschine 1 angeordnet.

Das freie, nicht mit der Gewindespindel 17 verbundene Ende des Hydraulikzylinders 16 ist gelenkig mit einem Umlenkhebel 21 verbunden. Der Umlenkhebel 21 ist wiederum beispielsweise mittels Schraubverbindung mit dem Rahmenelement 9 der Sämaschine 1 verbunden. Fig. 5 zeigt den Umlenkhebel 21 in Detail. Der Umlenkhebel 21 ist um eine im Wesentlichen horizontal in Fahrtrichtung F liegende Schwenkachse verschwenkbar und weist zwei zumindest annähernd rechtwinklig zueinander liegende Hebelarme 22A,22B auf, welche drehfest miteinander verbunden sind.

Der erste Hebelarm 22A ist im Wesentlichen aufrecht orientiert und gelenkig mit dem freien Ende des Hydraulikzylinders 16 verbunden. Eine Längenveränderung des zentralen Einstellelements 15, entweder durch Verstellen des Hydraulikzylinders 16 oder der Gewindespindel 17, bewirkt ein Verschwenken des Hebelarms 22A in horizontaler Richtung. Aufgrund der drehfesten Verbindung der Hebelarme 22A,22B führt dies zu einer Bewegung des Hebelarms 22B in vertikaler Richtung. Somit ist die aus der zentralen Einstelleinheit 15 und dem Umlenkhebel 21 geeignet, die horizontale Bewegung des zentralen Einstellelements 15 in eine vertikale Bewegung des Hebelarms 22B zu überführen.

Der Hebelarm 22B ist gelenkig mit einer Koppelstange 23 verbunden. Zusätzlich ist die Koppelstange 23 gelenkig mit dem Tragarm 14 verbunden. Eine vertikale Bewegung des Hebelarms 22B wird somit über die Koppelstange 23 auf den Tragarm 14 übertragen. Über den Tragarm 14 wird die Zustreich- und/oder Andrückvorrichtung 11 in vertikaler Richtung bewegt.

Über die beschriebene Mechanik wird mittels des zentralen Einstellelements 15 Arbeitsdruck und/oder Arbeitstiefe der Zustreich- und/oder Andrückvorrichtung 11 eingestellt. Zudem ist ein vollständiges Ausheben und/oder Absenken der Zustreich- und/oder Andrückvorrichtung 11 möglich.

Das Ausheben oder Absenken der Zustreich- und/oder Andrückvorrichtung 11 wird im Wesentlichen über den Verstellweg des Hydraulikzylinders 16 erreicht. Die Einstellung von Arbeitstiefe und Arbeitsdruck im Wesentlichen über den Verstellweg der Gewindespindel 17. Eine Kombinierte Nutzung der Verstellwege von Hydraulikzylinder 16 und Gewindespindel 17 zum Erreichen einer bestimmten Einstellung der Zustreich- und/oder Andrückvorrichtung 11 ist ebenso denkbar.

Die Sämaschine der Fig. 1 bis 5 weist beispielhaft zwei Tragarme 14 auf. Beide Tragarme 14 sind über jeweils eine Koppelstange 23 mit jeweils einem Umlenkhebel 21 verbunden. Damit die Einstellung über ein zentrales Einstellelement erfolgen kann, ist eine Verbindungsstrebe 24 vorgesehen. Die Verbindungsstrebe 24 ist gelenkig und kraftschlüssig mit den Hebelarmen 22A beider Umlenkhebel 21 verbunden. Somit wird die Bewegung des zentralen Einstellelements 15 auf beide Umlenkhebel 21 und somit auf beide Tragarme 14 übertragen. Damit ist eine gleichmäßige, symmetrische Bewegung der Zustreich- und/oder Andrückvorrichtung 11 sichergestellt.

Weist eine Sämaschine mehrere Tragarme 14 mit jeweils einem Umlenkhebel 21 auf, sind die Umlenkhebel 21 in der beschriebenen Weise kraftschlüssig untereinander mittels Verbindungsstreben 24 verbunden.

## Patentansprüche

1. Landwirtschaftliche Sämaschine (1) aufweisend einen Hauptrahmen, ein an dem Hauptrahmen angeordnetes einen Ladesteg (8) tragendes Rahmenelement (9), mehrere an dem Hauptrahmen über Halteelemente angelenkte Säschareinheiten (5) zur Ausbringung zu verteilenden Saatguts, sowie eine Zustreich- und/oder Andrückvorrichtung (11), welche zumindest einen quer zur Fahrrichtung (F) angeordneten Tragbalken (12) umfasst, der an zumindest zwei in Fahrtrichtung (F) nach vorn ragenden im vorderen Bereich gelenkig befestigten Tragarmen (14) befestigt ist und an dem quer zur Fahrtrichtung (F) mehrere Zustreich- und/oder Andrückelemente (13) angeordnet sind, **dadurch gekennzeichnet, dass** die Zustreich- und/oder Andrückvorrichtung (11) mittels zumindest eines Einstellelementes ausgehoben, abgesenkt und/oder mit einem Druck gegen den Erdboden beaufschlagt wird, **dass** ein zentrales, auf einer Maschinenseite angeordnetes und auf alle Tragarme (14) einwirkendes Einstellelement (15) vorgesehen ist.

2. Sämaschine (1) nach Anspruch 1, **dadurch gekennzeichnet, dass** das zentrale Einstellelement (15) geeignet ist, die Arbeitstiefe der Zustreich- und/oder Andrückvorrichtung (11) einzustellen.

3. Sämaschine (1) nach zumindest einem der vorangegangenen Ansprüche, **dadurch gekennzeichnet, dass** das zentrale Einstellelement (15) auf der in Fahrtrichtung (F) linken Seite der Sämaschine (1) angeordnet ist.

4. Sämaschine (1) nach zumindest einem der vorangegangenen Ansprüche, **dadurch gekennzeichnet, dass** das zentrale Einstellelement (15) längenveränderlich ausgebildet ist.

5. Sämaschine (1) nach zumindest einem der vorangegangenen Ansprüche, **dadurch gekennzeichnet, dass** zumindest ein Umlenkhebel (21) vorgesehen ist, der gelenkartig an dem zentralen Einstellelement (15) angelenkt ist und der Umlenkhebel (21) über eine Koppelstange (23) mit den Tragarmen (14) verbunden ist.

6. Sämaschine (1) nach zumindest einem der vorangegangenen Ansprüche, **dadurch gekennzeichnet, dass** jedem Tragarm (14) ein Umlenkhebel (21) mit Koppelstange (23) zugeordnet ist.

7. Sämaschine (1) nach zumindest einem der vorangegangenen Ansprüche, **dadurch gekennzeichnet, dass** die Schwenkachse des zumindest einen Umlenkhebels (21) parallel zur Fahrtrichtung (F) der Sämaschine (1) liegt.

8. Sämaschine (1) nach zumindest einem der vorangegangenen Ansprüche, **dadurch gekennzeichnet, dass** das zentrale Einstellelement (15) im Zusammenwirken mit dem zumindest einen Umlenkhebel (21) geeignet ist, eine Längenänderung des zentralen Einstellelements (15) in eine vertikale Bewegung der Tragarme (14) umzusetzen.

9. Sämaschine (1) nach zumindest einem der vorangegangenen Ansprüche, **dadurch gekennzeichnet, dass** eine Verbindungsstrebe (24), welche den zumindest einen Umlenkhebel (21) mit zumindest einem weiteren Umlenkhebel (21) verbindet, vorgesehen ist.

10. Sämaschine (1) nach zumindest einem der vorangegangenen Ansprüche, **dadurch gekennzeichnet, dass** das zentrale Einstellelement (15) einen Hydraulikzylinder (16) und eine Gewindespindel (17) umfasst.

11. Sämaschine (1) nach Anspruch 10, **dadurch gekennzeichnet, dass** die Einstellung der Gewindespindel (17) des zentralen Einstellelements (15) mittels eines dafür geeigneten Werkzeugs erfolgt.

12. Sämaschine (1) nach Anspruch 11, **dadurch gekennzeichnet, dass** das zentrale Einstellelement (15) bei Entfernen des zu seiner Einstellung geeigneten Werkzeugs automatisch verriegelt.

13. Sämaschine (1) nach zumindest einem der vorangegangenen Ansprüche 10 bis 12, **dadurch gekennzeichnet, dass** das Ausheben und/oder Absenken der Zustreich- und/oder Andrückvorrichtung (11) im Wesentlichen durch die Bewegung des Hydraulikzylinders (16) bewirkt wird und die Druckbeaufschlagung der Zustreich- und/oder Andrückvorrichtung (11) im Wesentlichen durch die Bewegung der Gewindespindel (17) bewirkt wird.

14. Sämaschine (1) nach zumindest einem der vorangegangenen Ansprüche, **dadurch gekennzeichnet, dass** die Tragarme (14) in ihrem vorderen Bereich gelenkig an dem den Ladesteg (8) tragenden Rahmenelement (9) angelenkt sind.

## Claims

1. Agricultural seed drill (1) having a main frame, having a frame element (9), which is arranged on the main frame and supports a loading platform (8), having a plurality of seed-coulter units (5), which are articulated on the main frame via retaining elements and are intended for spreading seed material which is to be distributed, and having a covering and/or pressure-exerting apparatus (11) comprising at least one supporting member (12), which is arranged transversely to the direction of travel (F) and is fastened on at least two supporting arms (14), which project forwards in the direction of travel (F) and are fastened in an articulated manner in the front region, a plurality of covering and/or pressure-exerting elements (13) being arranged on said supporting member in a direction transverse to the direction of travel (F), **characterized in that** the covering and/or pressure-exerting apparatus (11) is lifted out, lowered and/or pressed against the soil by means of at least one adjustment element, and **in that** a central adjustment element (15), which is arranged on one side of the machine and acts on all the supporting arms (14), is provided.

2. Seed drill (1) according to Claim 1, **characterized in that** the central adjustment element (15) is suitable for adjusting the operating depth of the covering and/or pressure-exerting apparatus (11).

3. Seed drill (1) according to at least one of the preceding claims, **characterized in that** the central adjustment element (15) is arranged on the left-hand side of the seed drill (1), as seen in the direction of travel (F).

4. Seed drill (1) according to at least one of the preceding claims, **characterized in that** the central adjustment element (15) is designed such that it can be altered in length.

5. Seed drill (1) according to at least one of the preceding claims, **characterized by** the provision of at least one deflecting lever (21), which is articulated on the central adjustment element (15) in the manner of a joint and is connected to the supporting arms (14) via a coupling rod (23).

6. Seed drill (1) according to at least one of the preceding claims, **characterized in that** each supporting arm (14) is assigned a deflecting lever (21) with a coupling rod (23).

7. Seed drill (1) according to at least one of the preceding claims, **characterized in that** the pivot axis of the at least one deflecting lever (21) is located parallel to the direction of travel (F) of the seed drill (1).

8. Seed drill (1) according to at least one of the preceding claims, **characterized in that** the central adjustment element (15) is suitable, in interaction with the at least one deflecting lever (21), to convert an alteration in length of the central adjustment element (15) into a vertical movement of the supporting arms (14).

9. Seed drill (1) according to at least one of the preceding claims, **characterized by** the provision of a connecting strut (24), which connects the at least one deflecting lever (21) to at least one further deflecting lever (21).

10. Seed drill (1) according to at least one of the preceding claims, **characterized in that** the central adjustment element (15) comprises a hydraulic cylinder (16) and a threaded spindle (17) .

11. Seed drill (1) according to Claim 10, **characterized in that** the threaded spindle (17) of the central adjustment element (15) is adjusted by means of a tool which is suitable for this purpose.

12. Seed drill (1) according to Claim 11, **characterized in that** the central adjustment element (15) locks automatically upon removal of the tool which is suitable for adjusting the same.

13. Seed drill (1) according to at least one of preceding Claims 10 to 12, **characterized in that** the operations of lifting out and/or lowering the covering and/or pressure-exerting apparatus (11) are/is performed essentially by the movement of the hydraulic cylinder (16), and the covering and/or pressure-exerting apparatus (11) is subjected to pressure essentially by the movement of the threaded spindle (17).

14. Seed drill (1) according to at least one of the preceding claims, **characterized in that** the supporting arms (14) have their front region articulated on the frame element (9), which supports the loading platform (8).

## Revendications

1. Semoir agricole (1) présentant
un bâti principal,
un élément de bâti (9) portant une traverse de charge (8) et disposé sur le bâti principal,
plusieurs unités (5) de semoir à soc qui délivrent les semences à répartir, articulées sur le bâti principal par l'intermédiaire d'éléments de maintien et
un ensemble (11) de recouvrement et/ou de poussée qui comporte au moins une poutre de support (12) disposée transversalement par rapport à la direction d'avancement (F), fixée sur au moins deux bras de bâti (14) débordant vers l'avant et fixés de manière articulée dans la partie avant, et sur laquelle plusieurs éléments (13) de recouvrement et/ou de poussée sont disposés transversalement par rapport à la direction d'avancement (F),
**caractérisé en ce que**
l'ensemble (11) de recouvrement et/ou de poussée est relevé, abaissé ou repoussé contre le sol au moyen d'au moins un élément de réglage et
**en ce qu'**un élément central de réglage (15) disposé sur un côté dur semoir et agissant sur tous les bras de bâti (14) est prévu.

2. Semoir agricole (1) selon la revendication 1, **caractérisé en ce que** l'élément central de réglage (15) permet de régler la profondeur de travail de l'ensemble (11) de recouvrement et/ou de poussée.

3. Semoir agricole (1) selon au moins l'une des revendications précédentes, **caractérisé en ce que** l'élément central de réglage (15) est disposé sur le côté du semoir agricole (1) situé à gauche dans la direction d'avancement (F).

4. Semoir agricole (1) selon au moins l'une des revendications précédentes, **caractérisé en ce que** la longueur de l'élément central de réglage (15) est ajustable.

5. Semoir agricole (1) selon au moins l'une des revendications précédentes, **caractérisé en ce que** au moins un levier de renvoi (21) articulé sur l'élément central de réglage (15) est prévu et **en ce que** le levier de renvoi (21) est relié aux bras de bâti (14) par l'intermédiaire d'une tringle d'accouplement (23).

6. Semoir agricole (1) selon au moins l'une des revendications précédentes, **caractérisé en ce qu'**un levier de renvoi (21) doté d'une tringle d'accouplement (23) est associé à chaque bras de bâti (14).

7. Semoir agricole (1) selon au moins l'une des revendications précédentes, **caractérisé en ce que** l'axe de pivotement du ou des leviers de renvoi (21) est disposé parallèlement à la direction d'avancement (F) du semoir agricole (1).

8. Semoir agricole (1) selon au moins l'une des revendications précédentes, **caractérisé en ce que** l'élément central de réglage (15) convient pour coopérer avec les ou les leviers de renvoi (21) en vue de convertir une modification de la longueur de l'élément central de réglage (15) en un déplacement vertical des bras de bâti (14).

9. Semoir agricole (1) selon au moins l'une des revendications précédentes, **caractérisé en ce qu'**une bielle de liaison (24) qui relie le ou les leviers de renvoi (21) à au moins un autre levier de renvoi (21) est prévue.

10. Semoir agricole (1) selon au moins l'une des revendications précédentes, **caractérisé en ce que** l'élément central de réglage (15) comporte un vérin hydraulique (16) ou une broche filetée (17).

11. Semoir agricole (1) selon la revendication 10, **caractérisé en ce que** le réglage de la broche filetée (17) de l'élément central de réglage (15) s'effectue au moyen d'un outil approprié à cette tâche.

12. Semoir agricole (1) selon la revendication 11, **caractérisé en ce que** l'élément central de réglage (15) se verrouille automatiquement lors de l'enlèvement de l'outil convenant pour son réglage.

13. Semoir agricole (1) selon au moins l'une des revendications 10 à 12 qui précèdent, **caractérisé en ce que** le relèvement et/ou l'abaissement de l'ensemble (11) de recouvrement et/ou de poussée sont obtenus essentiellement par le déplacement du vérin hydraulique (16) et **en ce que** l'application d'une poussée sur l'ensemble (11) de recouvrement et/ou de poussée est obtenue essentiellement par le déplacement de la broche filetée (17).

14. Semoir agricole (1) selon au moins l'une des revendications précédentes, **caractérisé en ce que** les bras de bâti (14) sont articulés par leur partie avant sur l'élément de bâti (9) portant la traverse de charge (8) .
